# NEW EUROPEAN PATENT SPECIFICATION

(11) **EP 0 206 072 B2**
(45) Date of publication and mention of the opposition decision: **01.07.1998**
(45) Mention of the grant of the patent: 08.09.1993
(21) Application number: 86107832.7
(22) Date of filing: 09.06.1986
(51) Int. Cl.: C08F 2/02, C08F 283/00

(54) **A method of preparation of acrylic polymer**
Verfahren zur Herstellung von Acrylpolymer
Méthode de préparation de polymère acrylique

(30) Priority: 17.06.1985 US 745100
(43) Date of publication of application: 30.12.1986
(73) Proprietor: PPG INDUSTRIES, INC., Pittsburgh Pennsylvania 15272 (US)
(72) Inventor: Kania, Charles Martin, Tarentum Pennsylvania 15084 (US)
(74) Representative: Sternagel, Hans-Günther, Dr.

(56) References cited:
- EP-A- 0 001 789
- EP-A- 0 184 761
- DE-A- 2 721 823
- GB-A- 987 353
- US-A- 3 466 269
- US-A- 4 414 370
- H. Christen "Grundlagen der organischen Chemie", Verlag Sauerländer, 1970, p. 321
- "Makromolekulare Stoffe", H. Bartl et al (Editors), Band E20, Thieme Verlag, 1987, p. 629
- F Billmeyer "Textbook of Polymer Science", 3rd Edition, John Wiley, 1984, 53, pp. 120-122
- H.-G. Elias "Macromolecules 2" 2nd edition, Plenum Press, 1984, pp. 829-832
- H.-G. Elias "Makromoleküle", Band 1, 5. Auflage, Hüthig Verlag, 1990, pp. 572-573
- High Polymers, Vol. 29, Polymerization Processes, C. Schildknecht et al, John Wiley, 1977, 91, pp. 228-247

## Description

The present invention relates to the preparation of low molecular weight vinyl addition polymers

In the preparation of low molecular weight acrylic polymers there are several techniques which are employed in order to achieve the desired molecular weight. For example, solvents are selected which not only provide a medium for the polymerization reaction and help maintain the desired reaction temperature but also possess chain transfer capability. Alternatively, one can employ conventional chain transfer agents such as mercaptans to control molecular weight. In addition, the amount of free radical initiator can be adjusted to help control the rate of polymerization and in turn, the molecular weight of the polymer being formed.

These techniques, however, are not without attendant difficulties, for example, polymer branching can occur which leads to increased molecular weight; or polymeric segments may form without any functionality; hence, they cannot be successfully crosslinked. Moreover, viscosity of the resultant polymer may give rise to unacceptable levels necessitating the addition of volatile organic solvents to reduce the viscosity. Of course, this leads to increased volatile organic content levels and all of the attending environmental concerns and also the fact that the solvents must be removed leads to longer production schedules. In addition, there is typically incomplete reaction of monomers which generally requires the addition of more initiator to increase the conversion of monomer to polymer. Moreover, this addition of extra initiator to reduce free monomer content usually results in an increased incidence of undesirable side reactions which lead to increased molecular weight and polydispersity values.

The prior art has attempted to address these types of difficulties in a number of ways, for example, by various techniques of bulk polymerization. U S-A-4,414,370; U S-A-4,487,897, and U S-A-3,466,269 are directed to special techniques for continuous bulk polymerization. U S-A-3,466,269 utilizes a process whereby the monomers to be polymerized are passed between two diathermic walls at a constant temperature between 170°C and 190°C during a period of time of 25 to 90 minutes. The monomers are polymerized in the form of a thin layer. U S-A-4,487,897 utilizes a screw type reactor wherein the monomers to be copolymerized are continuously supplied into an extruder and conveyed forwardly by the rotation of the screws. U S-A-4,414,370 is a further type of continuous bulk polymerization. This process is conducted at pressures in excess of atmospheric conditions, namely from 2.76 to 27.6 bar (40 to 400 psia), preferably 10.35 to 13.8 bar (150 to 200 psia). The polymerization temperatures are from 235-310°C, preferably from 245°C to 275°C.

GB-A- 987 353 relates to vinylic graft polymers prepared by polymerising vinylic monomers in the presence of polymeric compounds having molecular weights of e.g. 1800.

From EP-A-184 761 which is a document according to Article 54(3) EPC a method for producing ungelled polymeric reaction products having a number average molecular weight of up to 3000 is known. The polymers are produced by vinyl addition polymerization of a vinyl monomer component in the presence of an active hydrogen-containing polymer having a number average molecular weight of less than 3000 and preferably of benzyl alcohol as a solvent and chain transfer agent. This document does not disclose the combination of all features of the present claims.

It is the object of the invention to provide a method of preparing low molecular weight polymers with a relatively uniform low molecular weight in such a way as to achieve essentially complete conversion of monomer to polymer.

This object is attained by a semi-continuous process for preparing a polymeric reaction product which comprises the vinyl addition polymerization of a vinyl monomer component selected from C₁₋₁₈ alkyl acrylates, C₁₋₁₈ alkyl methacrylates, monoalkenyl aromatic vinyl monomers, functional vinyl monomers and mixtures thereof at a temperature of at least 200°C in the presence of a diluent characterized in that the reaction is conducted in the absence of benzyl alcohol and conventional chain transfer agents or solvents with chain transfer capability and in the presence of a free radical initiator in an amount of from 0.01 to 2 percent by weight based on the amount of vinyl monomer component and at a pressure less than 2.76 bar (40 psia) wherein the amount of unreacted vinyl monomer component present in the reaction mixture during the course of the vinyl addition polymerization, on the average, does not exceed 10 percent by weight of the total weight of the reaction mixture, the diluent is selected from polyester polyols, carboxyl functional polyesters, polyester urethane polyols, polyester polyepoxides and polyether polyols and has a molecular weight of at least 200, resulting in an ungelled product having a peak molecular weight within the range of from 500 to 5000 and a polydispersity value (Mw/Mn) less than 4.

The invention provides a semi-continuous process (batch continuous process using a continuous stirred tank reactor) which can be operated at essentially atmospheric conditions, in the absence of chain transfer agents and solvents with a minimal amount of free radical initiator.

### Detailed Description of the Invention

The ungelled polymeric reaction product is prepared by a semi-continuous process which comprises the vinyl addition polymerization of a vinyl monomer component. The process is conducted at a temperature of at least 200°C, under essentially atmospheric conditions and in the presence of a diluent having a molecular weight of at least 200.

A semi-continuous process according to the present invention is one in which a portion of the process ingredients are charged initially with the remainder being introduced continuously and no product withdrawal occurs during the course of the reaction. This type of process can also be termed a semi-batch process or a batch-continuous process. The process is usually conducted by first charging the diluent to a stirred tank reactor vessel and heating until a temperature of at least 200°C and usually between 200°C and 300°C is acchieved. The vinyl monomer component and free radical initiator are then added to the diluent in a continuous fashion while maintaining the elevated temperature. The product is then recovered and, if desired, it can be reduced in solids level by the addition of an inert organic solvent such as methyl amyl ketone, xylene, toluene and the like. This is typically unnecessary, however, since the ungelled polymeric reaction products of the present invention have relatively lower viscosities at high solids levels than art-recognized polymers prepared by conventional polymerization techniques.

As was mentioned above, the vinyl addition polymerization process of the present invention is conducted at an elevated temperature of at least 200°C. The vinyl addition polymerization is conducted under essentially atmospheric conditions. Although pressures less than 2.76 bar (40 pounds per square inch absolute (psia)) can be utilized, preferably the pressure does not exceed 1.38 bar (20 psia) and more preferably 1.04 bar (15 psia). The rate of introduction of the vinyl monomer component and initiator can vary widely and typically depends upon the particular reaction conditions, the specific composition of the vinyl monomer component and the desired molecular weight and molecular weight distribution of the polymeric reaction product. Generally the rate of introduction is rapid and ranges from 30 minutes to 300 minutes, more usually from 30 minutes to 120 minutes and preferably from 30 minutes to 60 minutes.

The combination of high temperature and rapid rate of addition both contribute to a high rate of conversion of vinyl monomer component to low molecular weight polymeric ungelled reaction product having a uniform and narrow distribution of molecular weight. This is achieved without the use of conventional chain transfer agents or solvents with chain transfer capability.

The rate of conversion of vinyl monomer component to ungelled polymeric reaction product is an essentially complete conversion. That is, the rate of conversion is such that the amount of unreacted vinyl monomer component present in the reaction mixture during the course of the vinyl addition polymerization, on the average, does not exceed 10 percent by weight of the total weight of the reaction mixture. Preferably, the amount of unreacted vinyl monomer component present in the reaction mixture during the course of the polymerization, on the average, does not exceed 5 percent by weight of the total weight of the reaction mixture. The high rate of conversion of monomer to polymer is very advantageous since not only does it markedly reduce the necessity for subjecting the polymeric product to a separation step to remove the unreacted monomer, but it also minimizes the need for additional free radical initiator during the course of the polymerization to increase the conversion of monomer to polymer. This is particularly important since this additional initiator often leads to branching, grafting, and even gellation of the polymeric product. The claimed vinyl addition polymerization process is faster, more efficient and more economical since starting material is essentially completely converted to product with a minimum of undesirable side reactions.

The vinyl monomer component includes a variety of monomers which contain polymerizable vinyl unsaturation. For example, alkyl acrylates and methacrylates which contain from 1 to 18 carbon atoms, preferably 1 to 6 carbon atoms in the alkyl portion such as methyl (meth)acrylate, ethyl (meth)acrylate, propyl (meth)acrylate, butyl (meth)acrylate, pentyl (meth)acrylate, hexyl (meth)acrylate, heptyl (meth)acrylate, 2-ethylhexyl methacrylate, lauryl (meth)acrylate, stearyl (meth)acrylate, isodecyl (meth)acrylate and isobornyl (meth)acrylate. Also useful are monoalkenyl aromatic vinyl monomers such as styrene, para-methyl styrene, and alpha-methyl styrene. Mixtures of the aforesaid monomers can also be utilized if desired. In a preferred embodiment of the present invention at least a portion of the vinyl monomer component is a monoalkenyl aromatic vinyl monomer. For example, in one such preferred embodiment at least 5 percent by weight based on the total weight of the vinyl monomer component is a monoalkenyl aromatic vinyl monomer.

Functional vinyl monomers can also be utilized and typically are included as part of the vinyl monomer component. In a preferred embodiment at least 20 percent by weight of the vinyl monomer component is a functional vinyl monomer. Suitable functional monomers include 2-hydroxyethyl acrylate, 2-hydroxyethyl methacrylate, 2-hydroxypropyl acrylate, 2-hydroxypropyl methacrylate, 2-hydroxybutyl methacrylate, acrylic acid, methacrylic acid, glycidyl methacrylate, isocyanatoethylmethacrylate, dimethylaminoethyl (meth)acrylate, tertiarybutylaminoethyl methacrylate. Preferably at least 10 percent by weight of the vinyl monomer component is an active hydrogen containing vinyl monomer or an epoxy group containing vinyl monomer.

There is present during the vinyl addition polymerization a free radical initiator. The free radical initiator is selected such that it is capable of initiating vinyl addition polymerization at the elevated temperatures utilized in the claimed process. The free radical initiator is utilized in minimal amounts, from 0.01 to up to 2 percent by weight based on the amount of vinyl monomer component. Preferably, peroxide or hydroperoxide initiators are utilized. Examples of these preferred types of initiators include di-tertiarybutyl peroxide, di-cumylperoxide; cumenehydroperoxide; 2,5-dimethyl-2,5-bis(tertiarybutylperoxy) hexane; hexyne-3-tertiarybutyl cumylperoxide; tertiaryamyl peroxide; 2,5-dihydroperoxy 2,5-dimethyl hexane; tertiaryamyl peroxy acetate; 1,1,-di-tertiaryamyl peroxycyclohexane; and ethyl 1,3,3'-di-tertiaryamyl peroxy butyrate.

The vinyl addition polymerization of the present invention is conducted in the presence of a diluent having a molecular weight of at least 200. The diluent can contain functional groups which are essentially non-reactive with any functionality present on the vinyl monomer component or the polymeric reaction product, or it can be essentially free of functionality. Preferably, the diluent is a polymeric material having a molecular weight of at least 500 and more preferably at least 1000. Moreover, the polymeric diluent preferably contains functional groups which are essentially non-reactive with any functionality present on the vinyl monomer component or the polymeric reaction product. For example, if one utilized a vinyl monomer component containing hydroxyl functionality, the diluent would preferably be essentially free of carboxyl groups. In the same vein, a carboxyl group containing vinyl monomer component would be utilized with a diluent essentially free of hydroxy functionality. And, of course, an epoxy group containing vinyl monomer component would be used with a diluent essentially free of carboxyl groups. Preferably, the diluent is selected such that it contains functionality of the same type as is present in the vinyl monomer component and resultant ungelled polymeric reaction product.

Suitable diluents are polyester polyols as well as carboxyl functional polyesters, polyester-urethane polyols, polyester-polyepoxides and polyether polyols.

Polyester polyols can be prepared by the esterification of an organic polycarboxylic acid or anhydride thereof with organic polyols and/or an epoxide. Usually, the polycarboxylic acids and polyols are aliphatic or aromatic dibasic acids or acid anhydrides and diols.

The diols which are usually employed in making the polyester include alkylene glycols, such as ethylene glycol, neopentyl glycol and other glycols such as hydrogenated Bisphenol A, cyclohexanediol, cyclohexanedimethanol, caprolactonediol, for example, the reaction product of epsilon-caprolactone and ethylene glycol, hydroxy-alkylated bisphenols, polyether glycols, for example, poly(oxytetramethylene) glycol and the like. Polyols of higher functionality can also be used. Examples include trimethylolpropane, trimethylolethane, pentaerythritol, as well as higher molecular weight polyols such as those produced by oxyalkylating lower molecular weight polyols. An example of such a higher molecular weight polyol is the reaction product of 20 moles of ethylene oxide per mole of trimethylolpropane. Some monofunctional alcohols such as normal propyl alcohol and normal butyl alcohol can be used in the polyesterification.

The acid component of the polyester consists primarily of monomeric carboxylic acids or anhydrides having 2 to 18 carbon atoms per molecule. Among the acids which are useful are phthalic acid, isophthalic acid, terephthalic acid, tetrahydrophthalic acid, hexahydrophthalic acid, adipic acid, azelaic acid, sebacic acid, glutaric acid, chlorendic acid, tetrachlorophthalic acid, and other dicarboxylic acids of varying types. The polyester may include minor amounts of monobasic acids such as benzoic acid, stearic acid, acetic acid and oleic acid. Also, there may be employed higher polycarboxylic acids such as trimellitic acid and tricarballylic acid. Where acids are referred to above, it is understood that anhydrides of those acids which form anhydrides can be used in place of the acid. Also, lower alkyl esters of the acids such as dimethyl glutarate and dimethyl terephthalate can be used.

Besides polyester polyols formed from polybasic acids and polyols, polylactone-type polyesters can also be employed. These products are formed from the reaction of a lactone such as epsilon-caprolactone and a polyol.

As is readily apparant to those skilled in the art the polyesters can also be prepared such that they contain carboxyl functionality. This is typically accomplished by utilizing an excess of the acid component with respect to the diol.

The polyester-urethane polyols are formed by reacting an organic polyisocyanate with a polyester polyol as described above. The organic polyisocyanate is reacted with the polyol so that the OH/NCO equivalent ratio is greater than 1:1 so that the resultant product contains free hydroxyl groups. The organic polyisocyanate which is used in preparing the polyurethane polyols can be an aliphatic or an aromatic polyisocyanate or a mixture of the two. Aliphatic polyisocyanates (including cycloaliphatic polyisocyanates) are preferred. Also, diisocyanates are preferred, although higher polyisocyanates such as triisocyanates can be used. However, their use does result in some chain branching which results in increased viscosity and difficulties in formulating coating compositions.

Examples of suitable diisocyanates are 4,4'-diphenylmethane diisocyanate, 1,4-tetramethylene diisocyanate, isophorone diisocyanate and 4,4'-methylene-bis-(cyclohexyl isocyanate). Examples of suitable higher functionality polyisocyanates are polymethylene polyphenyl isocyanates.

Polyester-polyepoxides can be produced by chain extending a carboxyl functional polyester with an epoxide containing material such as epoxidized soybean oil.

Examples of polyether polyols are polyalkylene ether polyols which include those having the following structural formula: 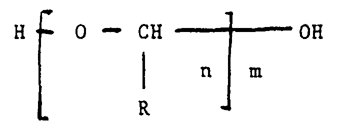 where the substituent R is hydrogen or lower alkyl containing from 1 to 5 carbon atoms including mixed substituents, n is from 2 to 6 and m is from 2 to 20. Included are poly(oxytetramethylene) glycols, poly(oxyethylene) glycols, poly(oxy-1,2-propylene) glycols and the reaction products of ethylene glycol with a mixture of 1,2-propylene oxide and ethylene oxide.

Also useful are polyether polyols formed from oxyalkylation of various polyols, for example, glycols such as ethylene glycol, 1,6-hexane-diol, and bisphenol A, or other higher polyols, such as trimethylolpropane and pentaerythritol. Polyols of higher functionality which can be utilized as indicated can be made, for instance, by oxyalkylation of compounds such as sorbitol or sucrose. One commonly utilized oxyalkylation method is by reacting a polyol with an alkylene oxide, for example, ethylene or propylene oxide, in the presence of an acidic or basic catalyst.

Preferably, a polyester polyol is utilized as the diluent for the vinyl addition polymerization.

The ungelled polymeric reaction products of the present invention are low molecular weight materials, that is, they have peak molecular weights within the range of from 500 to 5000, preferably 1000 to 4000. The reaction products also have a uniform molecular weight distribution which is evidenced by polydispersity values which are less than 4, preferably from 2 to 3. The polydispersity value is the ratio of the weight average molecular weight to the number average molecular weight. It should be noted that in embodiments wherein a higher molecular weight polymeric diluent is utilized the molecular weight distribution of the ungelled polymeric reaction product may be somewhat widened which will be evidenced by higher polydispersity values than those which are preferred.

The molecular weights of the ungelled polymeric reaction products of the present invention are determined by gel permeation chromatography using a polystyrene standard. Therefore, it is not the actual molecular weight which is measured but an indication of the molecular weight as compared to polystyrene. The values which are obtained are commonly referred to as polystyrene numbers; however, for the purposes of this application they are referred to as molecular weights.

In measuring the peak molecular weight using polystyrene as the standard, a Waters Associates gel permeation chromatograph Model 201 was used. Six micro-Styragel columns were used. Each column measured 30 centimeters in length and had an inside diameter of 7.8 millimeters. A differential refractometer was used as detector, and the columns were arranged according to their pore size on the order of 10², 10³, 10⁴, 10⁵, 50, 10 nm (10³, 10⁴, 10⁵, 10⁶, 500, 100 Angstroms) with the 10² nm (10³ Anstrom) column being the first one. Tetrahydrofuran was used as a solvent with a flow rate of 2.0 milliliters/minute. The quality of the columns is checked by their "theoretical plate number" determined from orthodichlorobenzene. For the purposes of this application, those columns with theoretical plate numbers greater than 3000/30 cm were used.

To determine molecular weight by gel permeation chromatography (GPC), the instrument is first calibrated using a polystyrene standard. Polystyrene standards used were purchased from Pressure Chemicals Company, Pittsburgh, Pennsylvania. The polystyrene standards have dispersities (dispersity a weight average molecular weight/number average molecular weight) ranging from 1.05 to 1.10. The viscosity average molecular weights of the polystyrene standards used were 850,000; 233,000; 47,400; 17,400 and 3,600. To obtain a calibration curve, a set of 0.1 percent (10 milligram polystyrene/1.0 ml tetrahydrofuran) polystyrene solutions in tetrahydrofuran were prepared, and a 0.5 ml sample size was injected into the columns and a GPC chromatogram was obtained. The elution volume of each peak corresponding to a given molecular weight of the polystyrene standard was measured, and the date was plotted on a semilogarithmic paper (logarithm scale in the ordinate and linear scale in the abscissa). A linear least squares plot of log₁₀ (molecular weight) versus elution volume in milliliters is used as a calibration curve. The lowest molecular weight of the polystyrene standard used was 3,600, and the calibration curve beyond that was extrapolated down to 100. The upper and lower exclusion limits of this set of columns are 5,000,000 and 100, respectively, in terms of polystyrene molecular weight. The sample whose molecular weights are to be determined was prepared as a 1.0 percent tetrahydrofuran solution. After filtration through a 0.5 µm filter, available from Millapore Corporation, a 0.5 ml sample size was injected into the columns and a GPC chromatogram obtained under the same experimental conditions as the calibration. The molecular weight which is reported is the peak molecular weight which is the polystyrene number in the molecular weight distribution curve at the peak. Where there is more than one peak, the highest peak is intended.

The ungelled polymeric reaction products prepared by the method of the present invention are useful as film forming vehicles in the preparation of coating compositions such as, for example, coating compositions useful in building product applications. The resultant coating compositions typically have low volatile organic content, VOC, preferably to a maximum of 0.42 g/cm³ (3.5 pounds per gallon). Moreover, the cured films exhibit good hardness and solvent resistance as well as water resistance.

In preparing the coating compositions the ungelled polymeric reaction products are usually combined with curing agents which are capable of reacting with functionality which is present on the reaction product. It should be kept in mind, however, that depending upon the monomer composition utilized in preparation, the ungelled polymeric reaction product can be used without curing agent to form a thermoplastic coating composition.

Examples of suitable curing agents are aminoplast and polyisocyanate curing agents, including blocked isocyanates; amine curing agents; and epoxy containing materials. Typically, a cure promoting catalyst is utilized in conjunction with an aminoplast curing agent, for example, acid catalysts and blocked acid catalysts such as para toluene sulfonic acid, di-nonylnapthalene disulfonic acid, and the amine blocked forms of both of these.

A solvent can be utilized, in minimal amounts, to facilitate formulation and application of the coating compositions of the present invention. An organic solvent is utilized which is compatible with the components of the compositions. The amounts of polymeric reaction product, curing agent, and catalyst will, of course, vary widely depending upon many factors, among them the specific components of the composition and the intended use of the composition. The curing agents mentioned above are described more fully below.

Aminoplast condensates are obtained from the reaction of formaldehyde with an amine or an amide. The most common amines or amides are melamine, urea or benzoguanamine, and are preferred. However, condensates with other amines and amides can be employed, for example, aldehyde condensates or triazines, triazoles, guanidines, guanamines and alkyl and aryl di-substituted derivatives of such compounds including alkyl and aryl-substituted ureas and alkyl and aryl-substituted melamines and benzoguanamines. Some examples of such compounds are N,N-dimethylurea, N-phenylurea, dicyandiamide, formoguanamine, acetoguanamine, 6-methyl-2,4-diamino-1,3,5-triazine, 3,5-diaminotriazole, triaminopyrimidine, 2,6-triethyltriamine-1,3-5-triazine.

While the aldehyde employed is most often formaldehyde, other aldehydes such as acetaldehyde, crotonaldehyde, benzaldehyde and furfural may be used.

The aminoplast contains methylol or similar alkylol groups and preferably at least a portion of these alkylol groups are etherified by reaction with an alcohol to provide organic solvent-soluble resins. Any monohydric alcohol can be employed for this purpose including such alcohols as methanol, ethanol, butanol and hexanol.

Preferably, the aminoplasts which are used are melamine, urea- or benzoguanamine-formaldehyde condensates etherified with an alcohol containing 1 to 4 carbon atoms such as methanol, ethanol, butanol or mixtures thereof.

Polyisocyanates and blocked polyisocyanates may also be used as curing agents. Examples of suitable polyisocyanates include monomeric polyisocyanates such as toluene diisocyanate and 4,4'-methylene-bis-(cyclohexyl isocyanate), isophorone diisocyanate and NCO-prepolymers such as the reaction products of monomeric polyisocyanate such as those mentioned above with polyester of polyether polyols. Particularly useful isocyanates are the isocyanate from isophorone isocyanate commercially available from Veba Company as T1890 and the biuret from 1,6-hexamethylene diisocyanate commercially available from Bayer as DESMODUR® N. The polyisocyanate may optionally be blocked. Examples of suitable blocking agents are those materials which would unblock at elevated temperatures such as low aliphatic alcohols such as methanol, oximes such as methyl ethyl ketone oxime, and lactams such as caprolactam. Blocked isocyanates can be used to form stable one-package systems. Polyfunctional isocyanates with free isocyanate groups can be used to form two-package room temperature curable systems. In these systems, the product and isocyanate curing agent are mixed just prior to their application.

Suitable amine curing agents which are useful for curing epoxide containing materials include aliphatic and cycloaliphatic amines and polyamides. Examples of suitable amines include ethylene diamine; diethylene triamine; triethylene tetramine; tetraethylene pentamine; and polyoxypropylene amines commercially available from Jefferson Chemicals under the trademark designation JEFFAMINE.®

Polyamides which are useful are those derived from fatty acids or dimerized fatty acids or polymeric fatty acids and aliphatic polyamines. For example, the materials commercially available from General Mills under the trademark designation VERSAMIDE® are quite useful.

Suitable epoxide containing materials which can be used for curing amine or acid functional polymeric reaction products include diglycidyl compounds such as EPON® 828 and EPONEX® DRH 151 which are commercially available from Shell Chemical Company. Also useful are cycloaliphatic glycidyl compounds such as ERL 4221 which is commercially available from Union Carbide.

In addition, the compositions may contain a variety of other optional ingredients, including pigments, fillers, plasticizers, antioxidants, surfactants and flow control agents.

The compositions can be applied by any conventional method including brushing, dipping, flow coating, etc., but typically they are applied by spraying. Also, the compositions can be applied over a variety of substrates including wood, metals, and glass.

The following examples are illustrative of the invention and are not meant to limit it to their details.

### EXAMPLE I

This Example illustrates the preparation of a polymeric reaction product using a polyester polyol diluent.

| Charge | Ingredients | Parts by Weight (grams) |
|---|---|---|
| A | Polyester polyol¹ | 694.4 |
| B | Styrene | 646.9 |
| | ethylhexyl acrylate | 656.25 |
| | 2-hydroxyethyl methacrylate | 562.5 |
| | methyl methacrylate | 9.4 |
| | di-tertiarybutyl peroxide | 29.06 |
| C | methyl amyl ketone | 592.5 |

| | | |
|---|---|---|
| (1) This polyester polyol was prepared from 3.2 moles 1,6-hexanediol, 1.5 moles hexahydrophthalic anhydride, and 1 mole adipic acid. This polyol had a hydroxyl number of 107, an acid value of 8.14, and a peak molecular weight of 2380 as determined by gel permeation chromatography (GPC) using a polystyrene standard. | | |

A suitably equipped reactor vessel was charged with (A) and heated to reflux. The reaction mixture was then stripped until a temperature of 250°C was achieved. Charge (B) was then added over a thirty-minute period at a rate of 350 milliliters per five-minute period. The reaction mixture was held at a temperature of about 215°C for ten minutes and subsequently cooled to below 150°C. Charge (C) was then added. The resultant product had a total solids content of 79.7 percent at 110°C, a Gardner viscosity of I-, a peak molecular weight of 3162 and a polydispersity of 3.0 as determined by GPC using a polystyrene standard.

### EXAMPLE II

This Example utilizes a different vinyl monomer component than Example I and a polyester-polyurethane as a diluent.

| Charge | Ingredients | Parts by Weight (grams) |
|---|---|---|
| A | Polyester-urethane² | 350.1 |
| B | hydroxylpropyl acrylate | 525.0 |
| | butyl methacrylate | 493.5 |
| | styrene | 31.5 |
| | di-tertiarybutyl peroxide | 16.3 |
| C | methyl amyl ketone | 331.8 |

| | | |
|---|---|---|
| (2) This polyester-urethane was prepared by chain extension of a polyester polyol prepared from 2 moles of neopentyl glycol and 1 mole of hexahydrophthalic anhydride and having a hydroxyl value of 312. The chain extension was carried out using 1,6-hexanediol and trimethylene hexamethylenediisocyanate. The polyester urethane was prepared from 50 weight percent of the polyester and 25 weight percent each of the diol and diisocyanate. The hydroxyl number of the polyester-urethane was 80 and the peak molecular weight was 2150 as determined by GPC using a polystyrene standard. | | |

This Example was prepared in a manner similar to Example I, above, except that Charge B was added over a thirty-minute period at a rate of 185 milliliters per fifteen-minute period. The reaction mixture was held at a temperature of about 215°C for ten minutes and then cooled to below 150°C. Charge C was then added. The resultant product had a total solids content of 77.2 at 110°C a Gardner viscosity of Y, and a peak molecular weight of 2749 as determined by GPC using a polystyrene standard and a polydispersity of 3.2.

### EXAMPLE III

This Example and Example IV are similar except that this Example utilizes ten percent polyester polyol diluent while Example IV utilizes twenty percent.

| Charge | Ingredients | Parts by Weight (grams) |
|---|---|---|
| A | polyester polyol³ | 100 |
| B | 2-hydroxyethyl methacrylate | 360 |
| | butyl acrylate | 180 |
| | butyl methacrylate | 180 |
| | styrene | 180 |
| | di-tertiarybutyl peroxide | 10.4 |
| C | methyl amyl ketone | 250 |

| | | |
|---|---|---|
| (3) This polyester polyol was prepared from neopentyl glycol and hexahydrophthalic anhydride. It had a hydroxyl number of 271 and a peak molecular weight of 500 as determined by GPC using a polystyrene standard. | | |

This Example was prepared in a manner similar to Example I, above, except that Charge B was added over a thirty-minute period at a rate of 167 milliliters per five-minute period. The product was held at a temperature of about 215°C for ten minutes and then cooled to below 150°C. Charge C was then added. The resultant product had a total solids content of 77.4 at 110°C, a Gardner viscosity of Z-, and a peak molecular weight of 2972 as determined by GPC using a polystyrene standard and a polydispersity of 2.67.

### EXAMPLE IV

| Charge | Ingredients | Parts by Weight (grams) |
|---|---|---|
| A | polyester polyol⁴ | 200 |
| B | 2-hydroxyethyl methacrylate | 320 |
| | butyl methacrylate | 160 |
| | butyl acrylate | 160 |
| | styrene | 160 |
| | di-tertiarybutyl peroxide | 9.24 |
| C | methyl amyl ketone | 250 |

| | | |
|---|---|---|
| (4) This polyester polyol has been described in footnote (3), above. | | |

This Example was prepared in a manner similar to Example I except that Charge B was added over a thirty-minute period at a rate of 150 milliliters per five-minute period. The resultant product had a total solids content of 78.65 at 110°C, a Gardner viscosity of W-, and a peak molecular weight of 2625 as determined by GPC using a polystyrene standard and a polydispersity of 2.67.

### EXAMPLES V, VI and VII

These Examples illustrate the use of various free radical initiators.

| Charge | Ingredients | Parts by Weight (grams) | | |
|---|---|---|---|---|
| | | V | VI | VII |
| A | polyester polyol⁵ | 389.0 | 389.0 | 389.0 |
| B | ethylhexyl acrylate | 367.5 | 367.5 | 367.5 |
| | styrene | 362.3 | 362.3 | 362.3 |
| | 2-hydroxyethyl methacrylate | 315.0 | 315.0 | 315.0 |
| | methyl methacrylate | 5.3 | 5.3 | 5.3 |
| | t-amyl peroxyacetate | 27.2 | | |
| | 1,1-di-t-amyl peroxycyclohexane | | 20.4 | |
| | ethyl 1,3,3'-di-t-amyl-peroxybutyrate | | | 21.7 |
| C | methyl amyl ketone | 331.8 | 331.8 | 331.8 |

| | | | | |
|---|---|---|---|---|
| (5) This polyester polyol has been described in footnote (1), above. | | | | |

These Examples were prepared in a manner similar to Example I, above, except that Charge B was added over a thirty-minute period at a rate of 180 milliliters per five-minute period. The resultant products had a total solids content of 78.15, 77.7, and 76.0 at 110°C, respectively, a Gardner viscosity of X, X, and S, respectively, and a peak molecular weight as determined by GPC using a polystyrene standard of 3754, 3754 and 3296 for Examples V, VI and VII, respectively and polydispersities of 3.08, 3.13 and 2.96, respectively.

### EXAMPLE VIII

This Example illustrates the preparation of a polymeric reaction product using an epoxide terminated polyester diluent. The polymeric reaction product was then formulated into a coating composition and evaluated for physical properties as set out below.

| Charge | Ingredients | Parts by Weight (grams) |
|---|---|---|
| A | epoxide-terminated⁶ polyester | 833.0 |
| B | ethylhexyl acrylate | 656.2 |
| | styrene | 646.9 |
| | hydroxyethyl methacrylate | 562.5 |
| | methyl methacrylate | 9.4 |
| | di-tertiarybutyl peroxide | 29.06 |
| C | methyl amyl ketone | 592.5 |

| | | |
|---|---|---|
| (6) This epoxide-terminated polyester was prepared from 0.6 mole butylene glycol, 1.0 mole adipic acid, 0.04 mole azelaic acid and epoxidized soybean oil. The solvent was diacetone alcohol which was stripped prior to beginning the vinyl addition polymerization. The epoxide-terminated polyester had a peak molecular weight of 3100 as determined by GPC using a polystyrene standard. | | |

This Example was prepared in a manner similar to Example I, above, except that Charge B was added over thirty minutes at a rate of 350 milliliters per five-minute period. The resultant product had a total solids content of 78.0 at 110°C, a Gardner viscosity of Y-, and a peak molecular weight of 3465 as determined by GPC using a polystyrene standard and a polydispersity of 2.84.

The coating composition using the aforedescribed polymeric reaction product was formulated in the following manner:

| Ingredients | Parts by Weight (grams) |
|---|---|
| Ungelled polymeric reaction product | 50 |
| CYMEL® 1130^{a} | 40 |
| Blocked acid catalyst^{b} | 2 |
| Methyl amyl ketone | 23 |

| | |
|---|---|
| (a) A methylated, butylated melamine-formaldehyde crosslinking agent which is commercially available from American Cyanamid. | |
| (b) A 0.75 percent solution in isopropanol of amine blocked dinonylnapthalene disulfonic acid. | |

The coating composition was prepared by combining the listed ingredients together with agitation. The composition was drawn down on a glass panel using a 152.4 µm (6.0 mil) drawbar and baked for 30 minutes at 121°C (250°F). The cured film was evaluated for hardness, solvent resistance, and water drop resistance. Sward Hardness was determined using a Sward Hardness Rocker, available from Gardner Laboratory, Bethesda, MD, as generally described in ASTM D2134-66.

The solvent resistance was a measure of the film's ability to withstand 100 double rubs with xylene and 100 double rubs with acetone. The number of rubs is the number of back and forth finger rubs across the film with a cloth soaked in the indicated solvent. "No effect" means that the film showed no visible evidence of detrimental effect as a result of the solvent.

In the water drop test a drop of water was applied to the cured film. The water droplet was covered with a watch glass and allowed to remain on the film for 12 hours at room temperature. "No effect" means that the film showed no visible evidence of deterioration. The results of the testing are set out below.

| Test | Result |
|---|---|
| 100 double rubs with xylene | No effect |
| 100 double rubs with acetone | No effect |
| Water Spot Test | No effect |
| Sward Hardness | 3 |

### EXAMPLE IX

In this Example the ungelled polymeric reaction product of Example II was formulated into a coating composition and evaluated for physical properties. The coating composition was prepared as follows.

| Ingredients | Parts by Weight (grams) |
|---|---|
| Ungelled polymeric reaction product of Example II | 50 |
| CYMEL® 1130 | 40 |
| Blocked acid catalyst^{c} | 2 |
| methyl amyl ketone | 23 |

| | |
|---|---|
| (c) A 0.75 percent solution in isopropanol of amine blocked dinonylnapthalene disulfonic acid. | |

The coating composition was prepared by combining the listed ingredients together with agitation. The composition was drawn down on a glass panel using a 162.4 µm (6.0 mil) drawbar and baked for 30 minutes at 121°C (250°F). The cured film was evaluated for hardness, solvent resistance, and water drop resistance. These tests have been described above in Example VIII.

| Test | Result |
|---|---|
| 100 double rubs with xylene | No effect |
| 100 double rubs with acetone | No effect |
| Water Spot Test | No effect |
| Sward Hardness | 40 |

## Claims

1. A semi-continuous process for preparing a polymeric reaction product which comprises the vinyl addition polymerization of a vinyl monomer component selected from C₁₋₁₈ alkyl acrylates, C₁₋₁₈ alkyl methacrylates, monoalkenyl aromatic vinyl monomers, functional vinyl monomers and mixtures thereof at a temperature of at least 200°C in the presence of a diluent
**characterized in that**
the reaction is conducted in the absence of benzyl alcohol and conventional chain transfer agents or solvents with chain transfer capability and in the presence of a free radical initiator in an amount of from 0.01 to 2 percent by weight based on the amount of vinyl monomer component and at a pressure less than 2.76 bar (40 psia) wherein the amount of unreacted vinyl monomer component present in the reaction mixture during the course of the vinyl addition polymerization, on the average, does not exceed 10 percent by weight of the total weight of the reaction mixture, the diluent is selected from polyester polyols, carboxyl functional polyesters, polyester urethane polyols, polyester polyepoxides and polyether polyols and has a molecular weight of at least 200, resulting in an ungelled product having a peak molecular weight within the range of from 500 to 5000 and a polydispersity value (Mw/Mn) less than 4.

2. The process of Claim 1 wherein at least 10 percent by weight of the vinyl monomer component is an active hydrogen containing vinyl monomer or an epoxy group containing vinyl monomer as a functional vinyl monomer.

3. The process of Claim 1 wherein at least a portion of the vinyl monomer component is a monoalkenyl aromatic vinyl monomer.

4. The process of Claim 3 wherein the monoalkenyl aromatic vinyl monomer is styrene.

5. The process of Claim 1 wherein the free radical initiator is selected from peroxides or hydroperoxides.

6. The process of Claim 1 wherein the amount of unreacted vinyl monomer component in the reaction mixture during the course of the vinyl addition polymerization, on the average, does not exceed 5 percent by weight of the total weight of the reaction mixture.

## Patentansprüche

1. Halbkontinuierliches Verfahren zum Herstellen eines polymeren Reaktionsproduktes durch Vinyladditionspolymerisation eines Vinylmonomerbestandteils, ausgewählt aus C₁₋₁₈-Alkylacrylaten, C₁₋₁₈-Alkylmethacrylaten, monoalkenylaromatischen Vinylmonomeren, funktionellen Vinylmonomeren und Mischungen derselben, bei einer Temperatur von mindestens 200° C in Gegenwart eines Verdünnungsmittels, dadurch gekennzeichnet, daß die Reaktion in Abwesenheit von Benzylalkohol und konventionellen Kettenübertragungsmitteln oder Lösemitteln mit Kettenübertragungsvermögen und in Gegenwart eines freie Radikale bildenden Starters in einer Menge von 0,01 bis 2 Gew.-%, bezogen auf die Menge Vinylmonomerbestandteil, und bei einem Druck von weniger als 2,76 bar (40 psia) ausgeführt wird, wobei die während der Vinyladditionspolymerisation in der Reaktionsmischung vorhandene Menge an nichtumgesetztem Vinylbestandteil im Mittel 10 Gew.-%, bezogen auf Gesamtgewicht der Reaktionsmischung, nicht überschreitet, das Verdünnungsmittel aus Polyesterpolyolen, carboxylfunktionellen Polyestern, Polyesterurethanpolyolen, Polyesterpolyepoxiden und Polyetherpolyolen ausgewählt ist und ein Molekulargewicht von mindestens 200 hat, so daß ein nichtgeliertes Produkt entsteht mit einem Spitzenmolekulargewicht im Bereich von 500 bis 5.000 und einem Polydispersionswert (Mw/Mn) von kleiner 4.

2. Verfahren nach Anspruch 1, dadurch gekennzeichnet, daß mindestens 10 Gew.-% des Vinylmonomerbestandteils ein aktiven Wasserstoff enthaltendes Vinylmonomer oder ein Epoxygruppen enthaltendes Vinylmonomer als ein funktionelles Vinylmonomer sind.

3. Verfahren nach Anspruch 1, dadurch gekennzeichnet, daß mindestens ein Teil des Vinylmonomerbestandteils ein monoalkenylaromatisches Vinylmonomer ist.

4. Verfahren nach Anspruch 3, dadurch gekennzeichnet, daß das monoalkenylaromatische Vinylmonomer Styrol ist.

5. Verfahren nach Anspruch 1, dadurch gekennzeichnet, daß der freie Radikale bildende Starter aus Peroxiden oder Hydroperoxiden ausgewählt ist.

6. Verfahren nach Anspruch 1, dadurch gekennzeichnet, daß die während der Vinyladditionspolymerisation in der Reaktionsmischung vorhandene Menge an nichtumgesetztem Vinylmonomerbestandteil im Mittel 5 Gew.-%, bezogen auf Gesamtgewicht der Reaktionsmischung, nicht überschreitet.

## Revendications

1. Un procédé semi-continu pour la préparation d'un produit de réaction polymérique qui comprend la polymérisation d'addition vinylique d'un composant monomère vinylique choisi parmi les acrylates d'alkyle en C₁₋₁₈, les méthacrylates d'alkyle en C₁₋₁₈, les monomères vinyliques aromatiques monoalcényliques, les monomères vinyliques fonctionnels et leurs mélanges, à une température d'au moins 200 °C en présence d'un diluant, caractérisé en ce que la réaction est conduite en l'absence d'alcool benzylique et d'agents de transfert de chaîne classiques ou de solvants avec une capacité de transfert de chaîne et en présence d'un amorceur à radicaux libres à la dose de 0,01 à 2 pour cent en poids par rapport à la quantité de composant monomères vinylique et sous une pression inférieure à 2,76 bars (40 psia), procédé dans lequel la quantité de composant monomère vinylique n'ayant pas réagi présent dans le mélange réactionnel au cours de la polymérisation d'addition vinylique n'excède pas, en moyenne, 10 pour cent en poids du poids total du mélange réactionnel, que le diluant est choisi parmi des polyester-polyols, des polyesters à fonctionnalité carboxyle, des polyester-uréthanne-polyols, des polyester-polyépoxydes et des polyéther-polyols et possède un poids moléculaire d'au moins 200, avec pour résultat un produit non gélifié ayant un pic de poids moléculaire compris dans la gamme de 500 à 5 000 et une valeur de polydispersité (Mw/Mn) inférieure à 4.

2. Le procédé selon la revendication 1 dans lequel au moins 10 pour cent en poids du composant monomère vinylique sont un monomère vinylique contenant de l'hydrogène actif ou un monomère vinylique contenant un groupe époxy en tant que monomère vinylique fonctionnel.

3. Le procédé selon la revendication 1 dans lequel une partie au moins du composant vinylique monomère est un monomère vinylique aromatique monoalcénylique.

4. Le procédé selon la revendication 3 dans lequel le monomère vinylique aromatique monoalcénylique est le styrène.

5. Le procédé selon la revendication 1 dans lequel l'amorceur à radicaux libres est choisi parmi les peroxydes ou des hydroperoxydes.

6. Le procédé selon la revendication 1 dans lequel la quantité de composant monomère vinylique n'ayant pas réagi dans le mélange réactionnel au cours de la polymérisation d'addition vinylique n'excède pas, en moyenne, 5 pour cent en poids du poids total du mélange réactionnel.
